# EUROPEAN PATENT APPLICATION

(11) **EP 1 504 988 A2**
(43) Date of publication of application: **09.02.2005**
(21) Application number: 04016982.3
(22) Date of filing: 19.07.2004
(51) Int. Cl.: B62M 9/10, B62K 19/16

(54) **Bicycle sprocket**

(30) Priority: 07.08.2003 JP 2003288331
(71) Applicant: Shimano Inc., Osaka 590-8577 (JP)
(72) Inventor: Nonoshita, Tetsu, Izumi Osaka (JP); Nishimoto, Yusuke, Sakai-city Osaka (JP)
(74) Representative: Grosse, Wolfgang, Dipl.-Ing.

(57) **Abstract**

A bicycle crank is provided with a bicycle sprocket that includes a sprocket ring part 90 and a fastening part 91. The sprocket ring part 90 includes first and second lateral side surfaces with a plurality of sprocket teeth 90a arranged around an outer periphery thereof. The sprocket ring part 90 is constructed of metal. The fastening part 91 is adapted to be fixedly coupled to a rotational drive unit such as the right crank arm of a bicycle. The fastening part 91 is constructed of synthetic resin material that is at least partially molded integrally around the first and second lateral side surfaces of the sprocket ring part 90 at an area located radially inwardly the sprocket teeth 90a. Preferably, the sprocket ring part 90 is provided with an anchor structure to facilitate non-rotatable engagement with fastening part 91. Preferably, the anchor structure includes through holes and/or protrusion and depression arrangement.

## Description

### BACKGROUND OF THE INVENTION

### Field of the Invention

The present invention generally relates to a bicycle sprocket. More specifically, the present invention relates to a bicycle sprocket configured to be mounted to a rotational drive unit such as a crank of a bicycle and to have a bicycle (drive-purpose) chain wrapped around the outside circumference thereof.

### Background Information

A bicycle is generally provided with a drive unit or drive train having front and rear sprockets and a chain wrapped around the sprockets. The front sprocket(s) is provided on the gear crank of the bicycle and the rear sprocket(s) is provided on the free hub of the bicycle. This type of bicycle sprocket is made of such materials as the aluminum having the designation A2014P under the standard JIS H4000 (category) or the iron having the designation SPCC under the standard JIS G3141 (category). When a plurality of sprockets are mounted to the gear crank and free hub in order to provide multiple gears, aluminum is used as the material in order to reduce the weight.

There are also known bicycle sprocket designs that reduce the weight even further by having a sprocket ring part that is made of aluminum and has the sprocket teeth formed thereon and a fastening part that is made of a carbon fiber material, attached to the inner circumference of the sprocket ring part, and fastened to the gear crank (see German Utility Model Publication No. 20218755). In the case of this sprocket, the fastening part and an inner circumferential portion of the sprocket ring part are fastened together by installing crimp pins in semicircular holes provided in the sprocket ring part and the fastening part. Since the sprocket is made using two separate members, a gap is provided between the sprocket ring part and the fastening part in order to prevent deformation caused by the effects of weather.

In view of the above, it will be apparent to those skilled in the art from this disclosure that there exists a need for an improved bicycle sprocket. This invention addresses this need in the art as well as other needs, which will become apparent to those skilled in the art from this disclosure.

### SUMMARY OF THE INVENTION

The two pieces of the conventional bicycle sprocket just described are fastened together with crimp pins, as mentioned above. It is relatively easy for looseness or play to develop between the two pieces when the two pieces are fastened in this manner. A gap is also provided between the two pieces of the conventional sprocket in order to prevent deformation caused by the weather. Consequently, the rigidity between the sprocket ring part and the fastening part must be provided by the crimp pins alone. Thus, it is difficult to maintain a high rigidity. Furthermore, the manufacturing process becomes relatively complex because a step is necessary during which the crimp pins are inserted into the two members and then crimped.

One object of the present invention is to provide a bicycle sprocket that is constructed of two different materials that is light weight, maintains rigidity, prevents looseness or play between the two materials, and can be fabricated with a simplified manufacturing process.

In accordance with one aspect of the present invention, a bicycle sprocket is provided that includes a sprocket ring part and a fastening part. The sprocket ring part includes first and second lateral side surfaces with a plurality of sprocket teeth arranged around an outer periphery thereof. The sprocket ring part is constructed of metal. The fastening part is adapted to be fixedly coupled to a rotational drive unit of a bicycle. The fastening part is constructed of synthetic resin material that is at least partially molded integrally around the first and second lateral side surfaces of the sprocket ring part at an area located radially inwardly the sprocket teeth.

The sprocket is configured to be mounted to a rotational drive unit such as a front crank of a bicycle and to have a bicycle (drive-purpose) chain wrapped around the outside circumference thereof.

With this sprocket, the sprocket ring part (on which the sprocket teeth that mesh with the chain are formed) is made of a metal that can maintain its strength and the fastening part (which is fastened to the rotational drive unit) is made of lightweight synthetic resin. The fastening part is formed integrally with both lateral faces of the portion of the sprocket ring part that is located more radially inward of the portion where the sprocket teeth are formed. Since the sprocket ring part and the fastening part are fixed together by molding the fastening part integrally to both lateral faces of the sprocket ring part, looseness or play therebetween can be prevented and a high rigidity can be maintained between the sprocket ring part and the fastening part. Additionally, the manufacturing process can be simplified because it is not necessary to provide a step for installing and crimping crimp pins. Furthermore, the weight of the sprocket can be reduced because the fastening part is made of a synthetic resin.

In accordance with a second aspect of the present invention, the bicycle sprocket ring part is provided with an anchor structure or anchor means that facilitates connection to the fastening part in a non-rotatable manner. With this sprocket, the sprocket ring part and the fastening part are rigidly connected in a non-rotatable manner via the anchor structure (means), thereby increasing the rigidity even further.

In accordance with a third aspect of the present invention, the sprocket anchor structure (means) includes a plurality of through holes formed such that they are spaced apart from one another in the circumferential direction of the sprocket ring part. With this sprocket, the fastening part is formed such that it passes through the through holes.

In accordance with a fourth aspect of the present invention, the anchor structure (means) includes a plurality of protrusions and depressions formed such that they are spaced apart from one another in the circumferential direction of the sprocket ring part. With this sprocket, the fastening part is formed along the circumferentially arranged protrusions and depressions.

In accordance with a fifth aspect of the present invention, the rotational drive unit to which the sprocket is configured to be coupled is a bicycle gear crank. The bicycle gear crank includes a crank connecting part and a plurality of arm parts. The crank connecting part is configured to connect in a non-rotatable manner to the bicycle crank shaft. The plurality of arm parts extend radially from the crank connecting part and have first fastening holes formed on the tip ends thereof. The fastening part has a ring part that is molded integrally with the sprocket ring part and a screw fastening part that extends radially inward from the ring part. The screw fastening part has a plurality of second fastening holes positioned such that they can be aligned with the first fastening holes of the bicycle gear crank. With this sprocket, the sprockets that are mounted to the bicycle gear crank can be made lighter in weight while also maintaining rigidity and preventing looseness or play.

In accordance with a sixth aspect of the present invention, the fastening part is constructed of a resin containing carbon fiber. The resin is obtained by impregnating a polyamide-based synthetic resin with a carbon fiber filler. With this sprocket, the carbon fiber impregnation enables a higher degree of strength to be obtained than when the fastening part is made of synthetic resin alone.

In accordance with a seventh aspect of the present invention, the sprocket ring part is constructed of an aluminum alloy and has an anodic oxide layer (e.g. anodized, oxidized porous aluminum, and/or alumilite layer) formed on the surface thereof. With this sprocket, the weight can be reduced while maintaining the strength of the sprocket ring part.

In accordance with an eighth aspect of the present invention, an annular diffusion layer of a fine triazine thiol powder is formed on both lateral faces of the sprocket ring part using an electro deposition method, and the fastening part is chemically bonded to the sprocket ring part by molding the fastening part integrally over the diffusion layer. With this sprocket, the sprocket ring part and the fastening part are strongly fixed to each other and the rigidity is increased even further because the fastening part and sprocket ring part are chemically bonded to each other.

In accordance with a ninth aspect of the present invention, the sprocket ring part is made by die punching a metal plate into a ring shape having the sprocket teeth on the outer circumference thereof. With this sprocket, the manufacturing process for the sprocket ring part is simplified. Also, a sprocket having a smaller diameter can be made simultaneously using the portion of the metal plate located radially inward of the portion used to make the sprocket ring part.

In accordance with a tenth aspect of the present invention, the sprocket ring part is made by die punching a metal plate into a flat rope-like piece (i.e., a long metal strip) having the sprocket teeth arranged lengthwise on one side thereof and bending the rope-like piece into a ring shape in such a manner that the sprocket teeth face radially outward. With this sprocket, although the manufacturing process for the sprocket ring part is slightly more complex, the shape of the portion of the metal plate used to make the sprocket ring part is simpler and a higher yield of sprocket ring parts can be obtained from each metal plate.

With the present invention, since the sprocket ring part and the fastening part are fixed together by molding the fastening part integrally to both lateral faces of the sprocket ring part, looseness can be prevented and a high rigidity can be maintained between the sprocket ring part and the fastening part. Additionally, the manufacturing process can be simplified because it is not necessary to provide a crimping step for installing crimp pins and crimping them. Furthermore, the weight of the sprocket can be reduced because the fastening part is made of a synthetic resin.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:
Figure 1 is a side elevational view of bicycle having a front crank set with a sprocket in accordance with a preferred embodiment of the present invention mounted thereto;
Figure 2 is an enlarged side elevational view of the front crank set of the bicycle illustrated in Figure 1;
Figure 3 is a partial, transverse, cross sectional view of the front crank set illustrated in Figures 1 and 2, as seen along section line III-III of Figure 2;
Figure 4 is side elevational view of the large sprocket of the front crank set illustrated in Figures 1-3, with the other parts of the crank set removed for the purpose of illustration;
Figure 5 is an enlarged, partial cross sectional view of the sprocket illustrated in Figure 4, as seen along section line V-V of Figure 4, with the right crank arm of the crank set coupled thereto for the purpose of illustration;
Figure 6 is an enlarged partial side elevational view of the sprocket ring part of the sprocket illustrated in Figure 4, in order to illustrate the arrangement of through holes of the sprocket ring part;
Figure 7 is a diagrammatic view illustrating a manufacturing process for a sprocket in accordance with the present invention;
Figure 8(a) is an enlarged, partial side elevational view of a sprocket ring part (equivalent to the view of Figure 6) for a modified sprocket in accordance with another preferred embodiment of the present invention;
Figure 8(b) is a side elevational view of a modified right crank arm with a modified sprocket utilizing the sprocket ring part illustrated in Figure 8(a) in accordance with the present invention; and
Figure 9 is a diagrammatic view illustrating another manufacturing process in accordance with the present invention.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

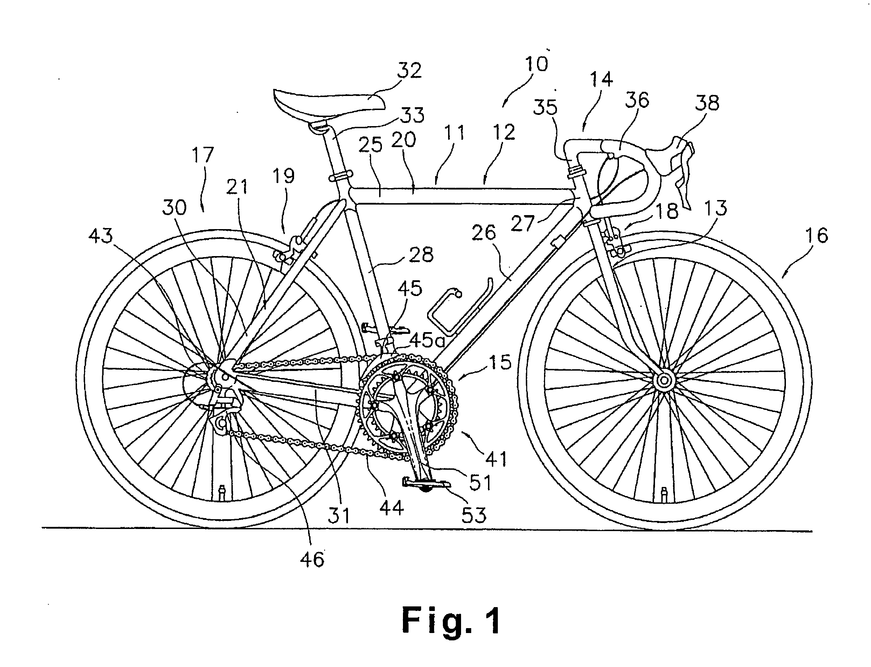

Referring initially to Figure 1, a bicycle 10 is illustrated in accordance with a first embodiment of the present invention. As an example of a bicycle 10 that employs an embodiment of the present invention, Figure 1 shows a road bike 10 having a drop-type handlebar unit 14. The road bike 10 has a diamond-shaped frame 11 that serves as the framework of the bicycle body. The frame 11 has a frame body 12 and a front fork 13. The front fork 13 is supported on a front part of the frame 12 such that it can rotate freely about an axis that is tilted slightly from vertical. The lower part of the front fork 13 is divided into two prongs. The bicycle 10 is also provided with a handlebar unit 14 connected to the front fork 13, a drive unit or drive train 15, a front wheel 16, a rear wheel 17 and front and rear brake devices 18 and 19. The drive train 15 is configured to convert the rider's pedaling force into driving force. The front wheel 16 is supported in a freely rotatable manner on the bottom end of the front fork 13. The rear wheel 17 is supported in a freely rotatable manner on a rear part of the frame body 12.

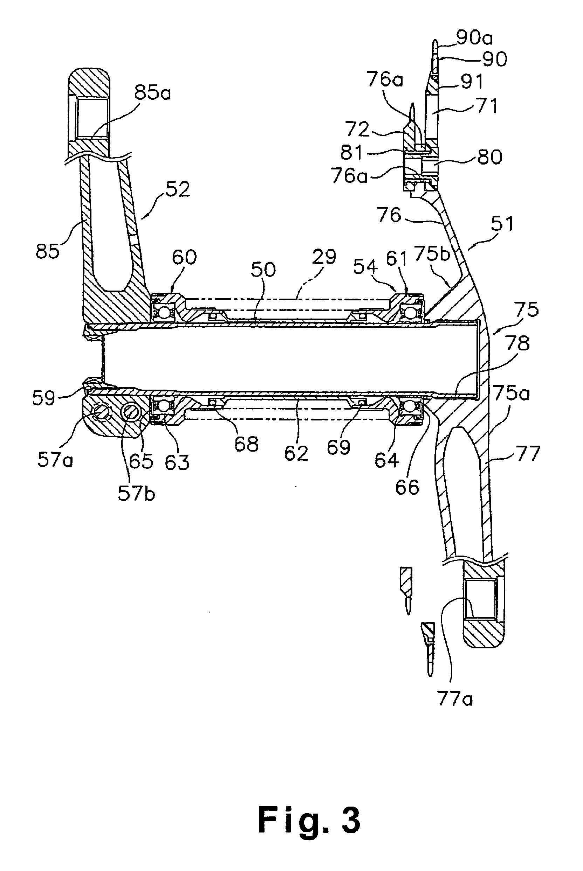

The frame body 12 has a triangular shaped main or front triangle 20 and a rear triangle 21 arranged rearward of the front triangle 20. The front triangle 20 is formed by a top tube 25, a down tube 26, head tube 27 and a seat tube 28. The top tube 25 is arranged generally horizontally, while the down tube 26 is arranged below the top tube 25 such that it slants upward toward the front. The head tube 27 is joined to the front ends of the top tube 25 and the down tube 26, while the seat tube 28 extends diagonally upward and is joined to the rear ends of the top tube 25 and down tube 26. A seat post 33 having a saddle 32 fastened thereto is secured in the seat tube 28 in such a manner that its position can be adjusted up and down. A cylindrical hanger 29 (Figure 3) is formed at the portion where the seat tube 28 and the down tube 26 join. The rear triangle 21 is formed by seat stays 30, chain stays 31 and the seat tube 28. The seat stays 30 are joined at their front ends to the seat tube 28 and extend diagonally downward as two separate prongs. The chain stays 31 extend rearward as two separate prongs from the bottom end of the seat tube 28 and are joined at their rear ends to the seat stays 30.

The handlebar stem 35 of the handlebar unit 14 is fastened to the upper part of the front fork 13 in such a manner that its vertical position can be selectively adjusted up and down relative to the front fork 13. A handlebar 36 extends to the left and right and is curved at both ends. The handlebar 36 is fastened to the top end of the handlebar stem 35. Brake levers 38 provided with gear shifting capability are mounted to both ends of the handlebar 36.

The drive unit 15 includes a front crank set or crank unit 41, a rear sprocket assembly or small gear unit 43, a chain 44, a front derailleur 45 and a rear derailleur 46. The crank set (crank unit) 41 is mounted on the hanger 29. The rear sprocket assembly (small gear unit) 43 mounted in a non-rotatable manner to the free hub of the rear wheel 17. The chain 44 is arranged on the crank set (gear crank unit) 41 and the rear sprocket assembly (small gear unit) 43 so as to extend therebetween. The front derailleur 45 is coupled to the rear triangle 21, while the rear derailleur 46 is coupled to the seat tube 28. The derailleurs 45 and 46 function as a means of changing gears. The front derailleur 45 has a chain guide 45a through which the chain 44 passes.

As shown in Figures 1-3, the crank set (crank unit) 41 basically includes a crank shaft 50 (Figure 3), a right crank arm (gear crank) 51 and a left crank arm (left crank) 52. The crank shaft 50 is supported in a freely rotatable manner in the hanger 29 of the frame 11. The right crank arm 51 is crimp-fastened to the right end of the crank shaft 50 and has a pedal 53 (Figure 1) mounted to its tip end, while the left crank arm 52 (Figure 3) is fastened in a detachable manner to the left end of the crank shaft 50 with another pedal 53 mounted to its tip end such that the rider can provide a pedaling force to the drive train 15.

As shown in Figure 3, the crank shaft 50 is mounted in a freely rotatable manner in the hanger 29 by means of a bottom bracket 54 mounted in the hanger 29. The crank shaft 50 is a hollow pipe-shaped member made of a high-rigidity alloy, such as chromium-molybdenum steel. The radially inwardly facing surface of the left end of crank shaft 50 is provided with internal threads 55b so that the left crank arm 52 can be fastened thereto with a bolt 59.

The bottom bracket 54 includes a left and right bearing housings 60 and 61, a cylindrical linking member 62, left and right ball bearings 63 and 64, and left and right cover members 65 and 66. The left and right bearing housings 60 and 61 are screwed into the ends of the hanger 29. The cylindrical linking member 62 is concentric with and links to the left and right bearing housings 60 and 61. The left and right ball bearings 63 and 64 are mounted in the left and right housings 60 and 61, respectively. The left and right cover members 65 and 66 are mounted between the crank shaft 50 and the inner rings of the left and right ball bearings 63 and 64, respectively.

The ball bearings 63 and 64 are sealed bearings having seals installed between the inner ring and the outer ring and are injected with grease in advance of assembling the bottom bracket 54. Consequently, lubrication maintenance can be eliminated. Arranging the bearings 63 and 64 outside the hanger 29 enables the diameter of the crank shaft 50 to be increased and, as a result, the crank shaft 50 can be made lighter in weight while maintaining high strength and rigidity by making the crank shaft 50 hollow.

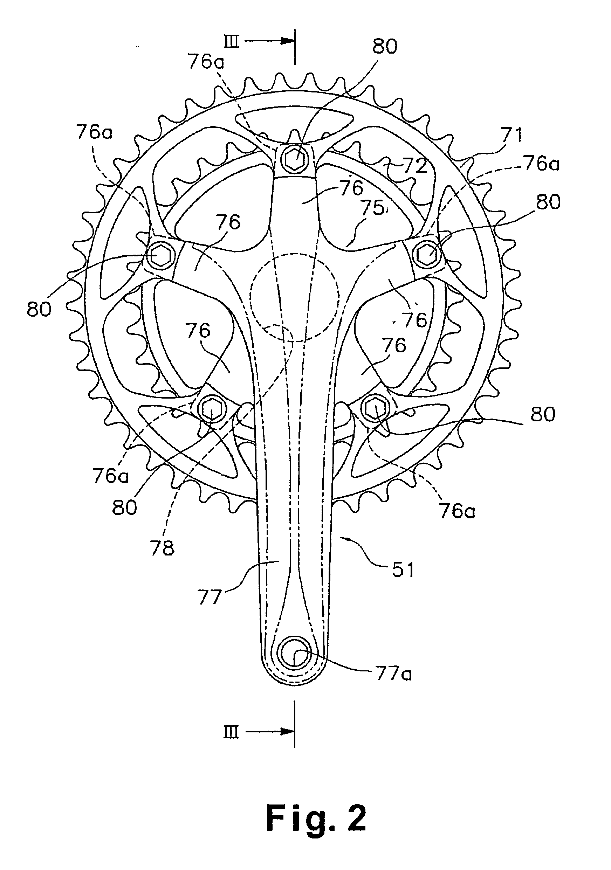

As shown in Figures 2 and 3, the right crank arm (gear crank) 51 includes a crank connecting part or portion 75, five support arm parts or portions 76 and a main right crank arm part or portion 77. The crank connecting portion 75 has an engagement depression 78 that forms a circular space and mounts in a non-rotatable manner to the right end of the crank shaft 50. The five support arm portions 76 extend radially outwardly from the crank connecting portion 75 and are configured such that two sprockets 71 and 72 (one large and one small, respectively) can be mounted on the tip ends thereof. The main crank arm portion 77 is preferably integrally formed with the crank connecting portion 75 and the five support arm portions 76 such that the right main crank arm portion 77 fixed to the right end of the crank shaft 50.

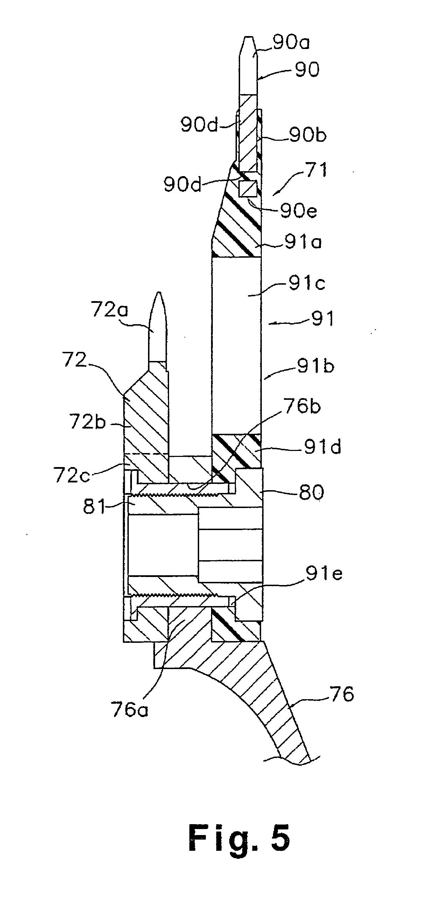

The tip ends of the support arm portions 76 are provided with mounting sections (parts) 76a for attaching the sprockets 71 and 72 thereto. The mounting sections 76a are recessed on opposite axial sides thereof to the other portions to form radial abutment surfaces. Thus, the sprockets 71 and 72 are mounted on both sides of the mounting sections 76a in such a manner that the sprockets 71 and 72 are concentric with respect to the crank shaft 50. As shown in Figure 5, each of the mounting sections 76a is provided with a first fastening hole 76b. Thus, the sprockets 71 and 72 can be fastened simultaneously to the mounting sections 76a with bolts 80 and nuts 81.

As shown in Figure 3, the right main crank portion 77 has a hollow structure and is formed integrally with the crank connecting portion 75 and the support arm portions 76. The right crank portion 77 extends radially outwardly, while slanting slightly outward in the axial direction from the outside surface 75a of the crank connecting portion 75. A threaded pedal mounting hole 77a is provided in the extended tip end of the right crank portion 77 for installing a pedal 53.

As shown in Figure 3, the engagement depression 78 of the crank connecting portion 75 is mounted to the second portion 56 of the crank shaft 50. The engagement depression 78 is formed to a length (i.e., depth) that is larger than the length of the second portion 56 and reaches almost to the outside surface 75a. As a result, the outside surface 75a of the crank connecting portion 75 and the main right crank portion 77 is smoothly curved and free of irregularities. Also, the depth of the engagement depression 78 is shorter than the diameter of the second portion 56 of the crank shaft 50.

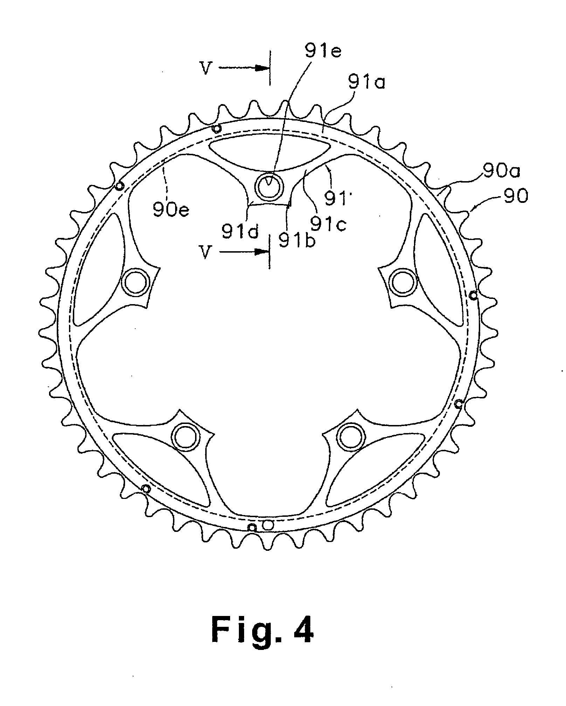

As shown in Figures 4-6, the sprocket 71 in accordance with a preferred embodiment of the present invention basically includes a sprocket ring part 90 and a fastening part 91. The sprocket ring part 90 is made of metal (e.g. aluminum), while the fastening part 91 is made of synthetic resin, formed integrally with the sprocket ring part 90. The fastening part 91 is fastened to the right crank arm 51 (Figures 2 and 3).

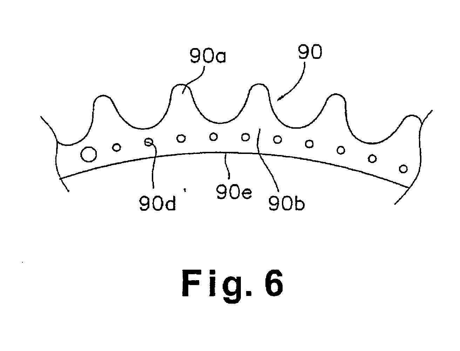

The sprocket ring part 90 is a ring-shaped member having multiple (i.e. a plurality of) sprocket teeth 90a on the outside circumference thereof upon which the chain 44 (Figure 1) is wrapped. As shown in Figure 6, multiple (i.e. a plurality of) circumferentially spaced through holes 90d are provided that extend between (first and second) lateral surfaces 90b and 90c of the sprocket ring part 90. The through holes 90d form an anchor structure (means) for rigidly connecting the fastening part 91 in a non-rotatable manner. The sprocket ring part 90 is made by die punching a metal plate into the ring shape having sprocket teeth 90a formed on the outside circumference thereof and through holes 90d are formed in both lateral faces 90b, 90c thereof.

The fastening part 91 is preferably made of a polyamide-based synthetic resin impregnated with a reinforcing material (for example, a carbon fiber filler). The fastening part 91 is formed integrally around both lateral surfaces 90b and 90c of the sprocket ring part 90 at an area of the sprocket ring part 90 located radially inward of where the sprocket teeth 90a are formed. The fastening part 91 has a ring section (part) 91a and a screw fastening section (part) 91b. The ring section 91a is molded integrally around and through the sprocket ring part 90. The screw fastening section 91b extends radially inward from the ring section 91a. The screw fastening section 91b has a plurality of second fastening holes positioned such that they can be aligned with said first fastening holes. The ring section 91a is formed integrally such that it covers both lateral faces 90b and 90c as well as the radially inwardly facing surface 90e of the sprocket ring part 90. The ring section 91a is also formed integrally such that it extends through the through holes 90d. The screw fastening section 91b has a plurality (five) of arch elements (parts) 91c that arch radially inwardly from the radially inward facing surface of the ring section 91a to form a plurality (five) arm fastening flanges (parts) 91d formed on a middle portion of each arch element 9 1 c such that they project radially inwardly. The arm fastening flanges 91d are positioned to be aligned face to face with the mounting sections 76a on the tip ends of the support arm portions 76. Each of the arm fastening flanges 91d is provided with a countersunk second fastening hole 91e positioned to face one of the first fastening holes 76b. Bolts 80 are installed from the second fastening hole 91e side and fastened with nuts 81 from the first fastening hole 76b (i.e. the opposite side) side such that the two sprockets 71 and 72 are fixed to opposite faces or sides of the mounting sections 76a. The bolts 80 are hollow bolts having hexagonal sockets and the nuts 81 are hollow nuts having flanges. The bolts 80 and nuts 81 are well-known items used for positioning and fastening front sprockets.

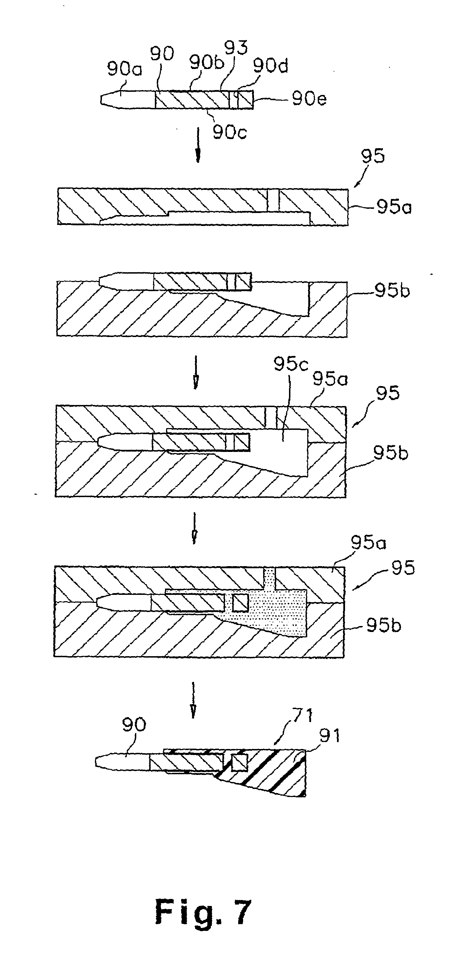

The sprocket 71 is manufactured using a process like that shown in Figure 7 in accordance with the present invention. In order to simplify the drawings of Figure 7, only the ring section 91a of the fastening part 91 is shown and the screw fastening section 91b is omitted. The manufacturing process for the sprocket 71 of the present invention will now be discussed in more detail.

First, an aluminum plate is die punched to obtain a sprocket ring part 90 shaped as shown in Figures 4 and 6 in a conventional manner. Preferably, an anodic oxide layer (e.g. an anodized, oxidized porous aluminum, and/or alumilite layer) is then formed on the surface of the sprocket ring part 90. An annular diffusion layer 93 of a fine triazine thiol powder is then formed on both lateral faces 90b and 90c of the sprocket ring part 90 using an electro deposition method. Each of these surface treatments are well known in the metal working/treating arts. Thus, each of these surface treatments will not be discussed and/or illustrated in detail herein, except as related to the present invention. The sprocket ring part 90 on which the diffusion layers 93 have been formed is then inserted into a mold 95 having an upper die 95a and a lower die 95b for molding the fastening part 91. The inside of the mold 95 holds the radially outermost area of the sprocket ring part 90 (i.e. the sprocket teeth 90a and the area slightly radially inwardly thereof), while forming a space 95c for forming the fastening part 91. After the sprocket ring part 90 is positioned, the mold 95 is closed and the internal space 95c is filled with a molten polyamide-based synthetic resin that has been impregnated with a reinforcing material such as carbon fiber filler. The synthetic resin and the diffusion layer 93 undergo a chemical reaction such that the fastening part 91 and the sprocket ring part 90 are chemically bonded together. Thus, by using an insert molding technique, a sprocket 71 having a fastening part 91 that is molded integrally with the sprocket ring part 90 is completed.

Since the sprocket ring part 90 and the fastening part 91 are fixed together by molding the fastening part 91 integrally (i.e., chemically, adhesively fixing) to both lateral faces 90b and 90c of the sprocket ring part 90, looseness can be prevented and a high rigidity can be maintained between the sprocket ring part 90 and the fastening part 91. Additionally, the manufacturing process can be simplified because it is not necessary to provide a riveting step for installing rivets or crimp pins and crimping them. Furthermore, the weight of the sprocket can be reduced because the fastening part 91 is made of a synthetic resin.

The sprocket 72 has a ring part 72b with a plurality of sprocket teeth 72a extending outwardly therefrom and a fastening part 72c that is integrally formed with the ring part 72b as a one-piece, unitary member. The fastening part 72c projects radially inward from the inner circumference of the ring part 72b. The sprocket 72 is constructed of a metallic material (for example, aluminum) using a well-known sprocket design and manufacturing techniques. The fastening part 72c of the sprocket 72 and the fastening part 91 of the sprocket 71 are fastened simultaneously to the support arm portions 76.

As shown in Figure 3, the left crank arm 52 has a hollow-structured left main crank arm part or portion 85 provided with a pedal mounting hole 85a for screw-installing a pedal 53 on the tip end thereof. The left crank arm 52 is provided with a slit (not shown) in the inner end thereof that mounts to the crank shaft 50. The left crank arm 52 is fastened securely to the crank shaft 50 by tightening two mounting bolts 57a and 57b (which are arranged in positions shown below the crank shaft 50 in Figure 3) such that the slit narrowed. The two mounting bolts 57a and 57b are, for example, hexagonal socket bolts inserted with their heads facing in opposite directions, respectively.

When mounting the crank set (crank unit) 41 configured as disclosed herein is mounted to the bottom bracket 54, the sprockets 71 and 72 are first mounted to the right crank arm 51. When the sprockets 71 and 72 are mounted to the right crank arm 51, the sprockets 71 are 72 are arranged in the recessed areas of the mounting sections 76a such that the respective fastening holes 76b and 91e are aligned face to face with each other. The bolts 80 are installed from the sprocket 71 side (i.e., the outside) and the nuts are installed from the sprocket 72 side (i.e., the inside) as best understood from Figures 3 and 5. The sprockets 71 and 72 are then secured by turning the bolts 80 using an Allen wrench (key) while preventing the nuts 81 from turning using a special tool. After the sprockets 71 and 72 have been mounted, the right crank arm 51 is crimp-fastened to the crank shaft 50. In order to perform crimp-fastening, the right end of the crank shaft 50 is inserted into the engagement depression 78 of the right crank arm 51. Then, a crimping tool is mounted from the left end of the crank shaft 50. With the crimping tool attached thereto, the crank shaft 50 and are, for example, mounted to a holding tool whose shape is matched to the shape of the outside surface of the crank connecting part 75 and the right crank 77 of the right crank arm 51. Then, the crimping tool is pressed with a pressing device. The right crank arm 51 is thereby crimp-fastened to the crank shaft 50.

### OTHER EMBODIMENTS

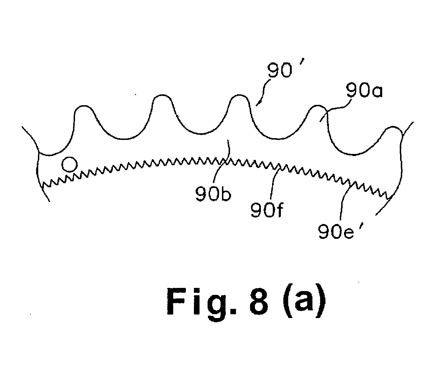

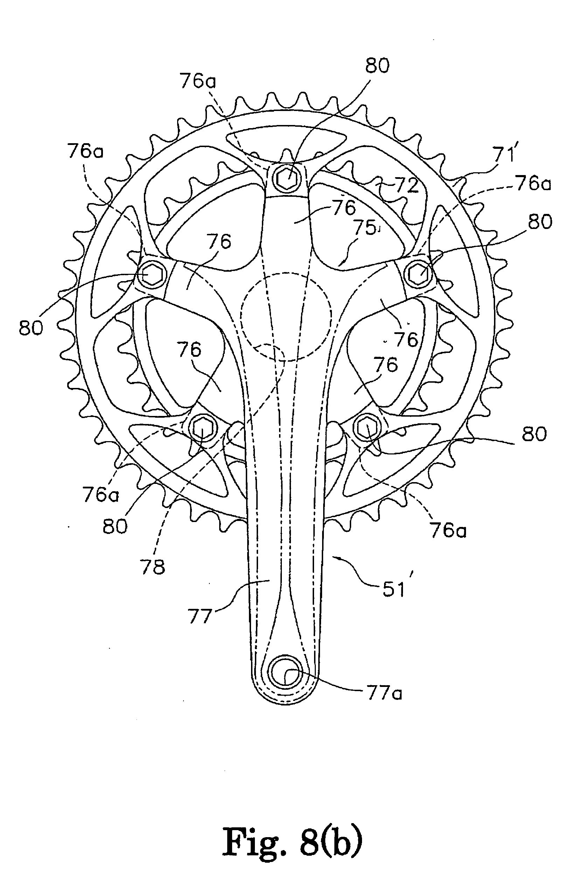

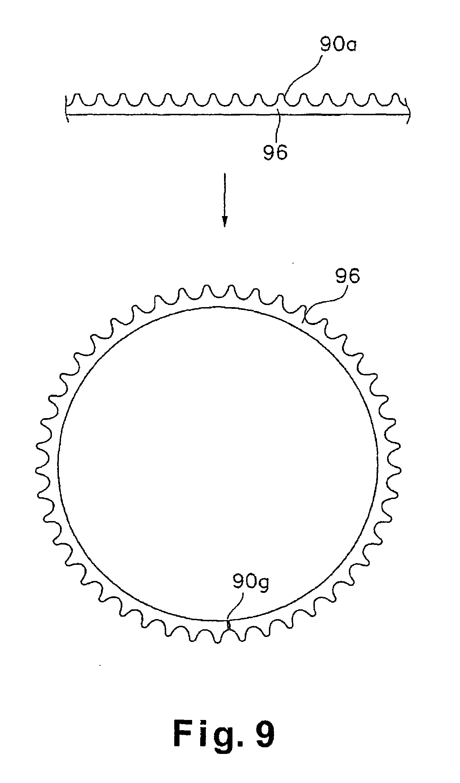

(a) Referring to Figures 8(a) and 8(b), another embodiment of the present invention will now be discussed in more detail. In the previous embodiment the anchor structure (means) of the sprocket ring part 90 comprised multiple circumferentially-spaced through holes 90d provided in the lateral faces 90b (as shown in Figure 6). However, it is also acceptable to replace the sprocket ring part 90 with a modified sprocket ring part 90' that has a modified anchor structure (means) at the inner circumference thereof that includes multiple protrusions and depressions 90f that are circumferentially arranged on the radially inward facing surface 90e' of the sprocket ring part 90' (as shown in Figure 8(a)). In other words, the sprocket ring part of the present invention can have the configuration shown in Figure 6 and/or the configuration shown in Figure 8(a) about its entire inner circumference.
   The modified sprocket ring part 90' is identical to the sprocket ring part 90, except the sprocket ring part 90' is preferably provided with the multiple protrusions and depressions 90f (Figure 8(a)) instead of the holes 90d (Figure 6), as mentioned above. Thus, the sprocket ring part 90' will not be discussed and/or illustrated in detail herein. Rather, it will be apparent to those skilled in the art from this disclosure that the descriptions and illustrations of the sprocket ring part 90 also apply to the modified sprocket ring part 90', except as explained and illustrated herein. Moreover, it will be apparent to those skilled in the art from this disclosure that the sprocket ring part 90' is configured to be used in place of the sprocket ring part 90 to form a modified sprocket 71' of a modified right crank arm 51', as seen in Figure 8(b). In view of the similarities between the sprocket ring parts 90 and 90' identical reference numerals will be used to identify identical parts, while identical reference numerals with a prime (') will be used to identify modified parts of the sprocket ring part 90'. The right crank arm 51' and the sprocket 71' are identical to the right crank arm 51 and the sprocket 71 of the previous embodiment, except for the use of the modified sprocket ring part 90'. In any case, it will be apparent to those skilled in the art from this disclosure that the sprocket ring part of the present invention preferably includes an anchor structure (means) to facilitate a tight connection with the fastening part 91.
(b) Although the previous embodiments described examples of a sprockets for a road bike, the present invention can be applied to any bicycle.
(c) Although the previous embodiments described examples of a sprockets configured to be mounted to a crank unit (crank set) 41 whose right crank arm 51 (51') is crimp-fastened to the crank shaft 50 that has the form of a hollow cylinder over its entire length, the present invention can also be applied to a sprocket configured to be mounted to a crank unit whose gear crank is bolt-fastened to the crank shaft or a crank unit having a separate right crank that is bolt-fastened to the crank shaft together with the gear crank. The present invention can also be applied to a sprocket configured to be mounted to the small (rear sprocket assembly) gear unit 43. Furthermore, it is acceptable for the sprocket 72, to also include a sprocket ring part made of an aluminum alloy and a fastening part made of a synthetic resin. In other words, while the features of the sprockets 71 (71') and the manufacturing techniques utilized to make the sprockets 71 (71') are particularly useful for the largest sprocket because it is typically heavier than smaller sprockets, it will be apparent to those skilled in the art from this disclosure that the present invention can be applied to any sized sprocket where the advantages of the present invention are desirable.
(d) Although in the previous embodiments the sprocket ring part 90 (90') is constructed of aluminum and the fastening part 91 is constructed of a polyamide-based synthetic resin, it will be apparent to those skilled in the art from this disclosure that it is acceptable for the sprocket ring part 90 (90') to be made of any other lightweight metallic material and for the fastening part 91 to be made of any other lightweight synthetic resin as needed and/or desired.
(e) Although in the previous embodiments the sprocket ring part 90 (90') is made by die punching an aluminum plate (metal plate) into the desired shape with the desired anchor structure (means), it will be apparent to those skilled in the art from this disclosure that it is also acceptable to fabricate the sprocket ring part 90 (90') as shown in Figure 9 by die punching a metal plate 96 into a flat rope-like piece having the sprocket teeth 90a arranged lengthwise on one side thereof and the anchor structure (means) along the opposite side, and then bending the rope-like piece into a ring shape in such a manner that the sprocket teeth 90a face radially outward and the anchor structure (means) is arranged radially inwardly. In such a case, a gap 90g is formed in the sprocket ring part 90 (90'). It is acceptable to either join the gap 90g by welding or crimping or to leave the gap unjoined. Even if the gap 90g is left unjoined, it is unlikely that the gap will cause a problem because the sprocket ring part 90 (90') is fixed to the fastening part 91 by the integral molding of the fastening part 91 described above.

As used herein, the following directional terms "forward, rearward, above, downward, vertical, horizontal, below and transverse" as well as any other similar directional terms refer to those directions of a bicycle equipped with the present invention. Accordingly, these terms, as utilized to describe the present invention should be interpreted relative to a bicycle equipped with the present invention.

The terms of degree such as "substantially", "about" and "approximately" as used herein mean a reasonable amount of deviation of the modified term such that the end result is not significantly changed. These terms should be construed as including a deviation of at least ± 5% of the modified term if this deviation would not negate the meaning of the word it modifies.

This application claims priority to Japanese Patent Application No. 2003-288331. The entire disclosure of Japanese Patent Application No. 2003-288331 is hereby incorporated herein by reference.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. A bicycle sprocket comprising:
a sprocket ring part (90, 90') including first and second lateral side surfaces with a plurality of sprocket teeth arranged around an outer periphery thereof, said sprocket ring part being constructed of metal; and
a fastening part (91) configured to be fixedly coupled to a rotational drive unit (15) of a bicycle, said fastening part (91) being constructed of synthetic resin material that is at least partially molded integrally around said first and second lateral side surfaces of said sprocket ring part (90, 90') at an area located radially inwardly said sprocket teeth.

2. The bicycle sprocket as recited in claim 1, wherein
said sprocket ring part (90, 90') includes an anchor structure that engages said fastening part (91) in a non-rotatable manner.

3. The bicycle sprocket as recited in claim 2, wherein
said anchor structure includes a plurality of circumferentially spaced through holes (90d) extending between said first and second lateral side surfaces (90b, 90c).

4. The bicycle sprocket as recited in claim 2 or 3, wherein
said anchor structure includes a plurality of circumferentially spaced protrusions and depressions (90f).

5. The bicycle sprocket as recited in claim 4, wherein
said circumferentially spaced protrusions and depressions (90f) are arranged on a radially inwardly facing surface (90e') of said sprocket ring part (90, 90').

6. The bicycle sprocket as recited in any of the preceding claims, wherein
said fastening part (91) has a ring section (91a) that is molded integrally around the sprocket ring part and a fastening section (91b) that extends radially inwardly from the ring section (91a), and said fastening section (91b) has a plurality of fastening holes.

7. The bicycle sprocket as recited in claim 6, wherein
said fastening section (91b) includes a plurality of fastening flanges (91d) that extend radially inwardly, and each of said fastening flanges (91d) has one of said fastening holes formed therein.

8. The bicycle sprocket as recited in claim 6 or 7, wherein
said synthetic resin of said fastening part (91) is formed by impregnating a carbon fiber filler in a polyamide-based synthetic resin.

9. The bicycle sprocket as recited in claim 8, wherein
said sprocket ring part (90, 90') is constructed of an aluminum alloy that has an anodic oxide layer formed on the surface thereof.

10. The bicycle sprocket as recited in claim 9, wherein
said sprocket ring part (90, 90') has diffusion layer of a fine triazine thiol powder formed on said first and second lateral surfaces (90b, 90c) of the sprocket ring part (90, 90') using electro deposition, and said fastening part (91) is chemically bonded to said sprocket ring part (90, 90') by molding said fastening part (91) integrally over said diffusion layer.

11. The bicycle sprocket as recited in claim 10, wherein
said sprocket ring part (90, 90') is constructed by die punching a metal plate into an annular ring shape having said sprocket teeth formed on said outer periphery thereof.

12. The bicycle sprocket as recited in claim 10, wherein
said sprocket ring part (90, 90') is made by die punching a metal plate into a flat rope-like piece having said sprocket teeth arranged lengthwise on one side thereof and then bending the rope-like piece into a ring shape in such a manner that said sprocket teeth face radially outwardly.

13. A bicycle crank arm assembly (41) comprising:
a bicycle crank arm (51, 52) having a crank connecting portion (75) configured to be connected in a non-rotatable manner to a bicycle crank shaft (50), a support arm portion (76) that extends radially from the crank connecting portion (75) and a main crank arm portion configured to be coupled to a bicycle pedal (53); and
a bicycle sprocket (71, 72) fixedly coupled to said bicycle crank arm (51, 52), said bicycle sprocket (71, 72) including
a sprocket ring part (90, 90') including first and second lateral side surfaces (90b, 90c) with a plurality of sprocket teeth (90a) arranged around an outer periphery thereof, said sprocket ring part (90, 90') being constructed of metal; and
a fastening part (91) that is fixedly coupled to said support arm portion (76), said fastening part (91) being constructed of synthetic resin material that is at least partially molded integrally around said first and second lateral side surfaces (90b, 90c) of said sprocket ring part (90, 90') at an area located radially inwardly said sprocket teeth (90a).
